# EUROPÄISCHE PATENTSCHRIFT

(11) **EP 0 859 331 B1**
(45) Veröffentlichungstag und Bekanntmachung des Hinweises auf die Patenterteilung: **14.11.2001**
(21) Anmeldenummer: 97122238.5
(22) Anmeldetag: 17.12.1997
(51) Int. Cl.: G06K 7/00

(54) **Kontaktblock für einen Chipkartenleser**
Contact block for an IC card reader
Bloc de contacts pour un lecteur de cartes à puce

(30) Priorität: 07.02.1997 DE 19704592
(43) Veröffentlichungstag der Anmeldung: 19.08.1998
(73) Patentinhaber: AMPHENOL-TUCHEL ELECTRONICS GmbH, D-74080 Heilbronn (DE)
(72) Erfinder: Reichardt, Manfred, 74189 Weinsberg (DE); Schuder, Bernd, 74193 Schwaigern (DE)
(74) Vertreter: Becker, Thomas, Dr., Dipl.-Ing.

(56) Entgegenhaltungen:
- EP-A- 0 316 699
- DE-A- 4 118 312
- DE-A- 4 418 609

## Beschreibung

Die Erfindung betrifft einen Kontaktblock für einen Chipkartenleser. Der Kontaktblock besteht aus einem Kontaktträger und darin angeordneten Kontakten. Die Kontakte sind mit einem ersten Ende zur Kontaktierung zugehöriger Leiterbahnen einer dem Kontaktblock zugeordneten gedruckten Schaltung ausgebildet und stehen mit ihrem zweiten freien Ende über die einer zugehörigen Chipkarte zugewandte Oberfläche des Kontaktträgers vor.

Derartige Kontaktblöcke sowie zugehörige Chipkartenleser und Chipkarten sind aus dem Stand der Technik bekannt (DE 41 18 312 C2; DE 44 11 345 C1).

Aus der DE 44 18 609 A1 ist ein Chipkartenleser mit Endlagenschalter bekannt, wobei der Endlagenschalter durch ein Gehäuse, einen Folienschalter und Schaltkontaktbetätigungsmittel gebildet wird.

Chipkartenleser haben die Aufgabe, die Kontakte des auf einer zugehörigen Karte angeordneten elektronischen Chips in einer bestimmten (End)position der Karte im Leser zu kontaktieren, um so ein "Lesen" der Informationen des Chips, gegebenenfalls aber auch ein Eingeben von Informationen in die Chipkarte zu ermöglichen.

Chipkartenleser der genannten Art werden zum Beispiel in stationären Kartentelefonen, Mobiltelefonen, Geldautomaten oder dergleichen eingesetzt.

Die elektrische Verbindung der Kontakte des Chips mit den Kontakten des Kontaktblocks wird über einen "Endlagenschalter" gemeldet, der gemäß der DE 38 10 275 A1 aus zwei Federkontakten besteht, von denen der eine kurz nach Erreichen der Endposition der Chipkarte im Leser (Lesestellung) durch Auflaufen auf einen zugehörigen Rahmen betätigt wird.

Aus der EP 0 316 699 A1 ist ein Kontaktschalter bekannt, der einen Einschub-Endkontakt bildet. Die Kontakte liegen mit ihren Kontaktenden im Normalfall gegeneinander, wobei ein Kontaktarm den anderen unter Vorspannung festhält. Beim Einschieben einer Karte in den Chipkartenleser wird die Karte gegen den Endlagenschalter geführt, bis sich die Kontaktarme voneinander lösen. In diesem Moment befindet sich die Karte in der Endlage und wird aktiviert.

Bei der eingangs genannten DE 44 11 345 C1 wird der Kontaktschalter dahingehend weitergebildet, daß die Kontaktelemente zunächst gemeinsam (also einteilig) aus einem elektrisch leitfähigen Material ausgeformt, danach in die gewünschte Zuordnung gebracht und danach in einem Kontakthalter positioniert werden, bevor sie materialmäßig und damit elektrisch voneinander getrennt werden. Ausgehend von einem zunächst einteiligen Kontaktschalter wird diese also erst in der Montageposition getrennt. Im Ergebnis ist der Kontaktschalter aber wiederum zweiteilig.

Aufgrund der großen Stückzahlen der heute eingesetzten Chipkartenleser besteht ein ständiges Bedürfnis, die Herstellung des Lesers und seiner Bestandteile zu vereinfachen und damit kostengünstiger zu machen.

Mit der Erfindung wird nunmehr ein Kontaktblock für einen Chipkartenleser zur Verfügung gestellt, dessen Schaltkontakt einteilig ist, wodurch gleichzeitig mehrere Vorteile erzielt werden, nämlich:
- es entfällt die zweite Kontaktfeder
- der Kontaktblock kann auf diese weise kleiner gestaltet werden, das heißt, es wird Platz auf einer zugehörigen Leiterplatte eingespart
- die Montage des Kontaktblocks wird vereinfacht.

Dabei wird der Kontaktschalter - wie die übrigen Kontakte des Kontaktblocks - mit einem Ende im Kontaktträger positioniert und im übrigen im Kontaktträger so angeordnet, daß der Schaltkontakt mit seinem anderen Ende - wie die übrigen Kontakte - über den Kontaktblock vorsteht, und zwar auf derselben Seite wie die übrigen Kontakte. Um die Schaltfunktion erfüllen zu können, wird das erste (Montage)ende des Schaltkontaktes - analog zu den übrigen Kontakten - mit einer Leiterbahn der zugehörigen gedruckten Schaltung in Kontakt gebracht und der zwischen den Kontaktenden verlaufende Abschnitt so ausgebildet und im Kontaktträger geführt, daß er bei der Kontaktierung der Kontakte der Chipkarte und den übrigen Kontakten des Kontaktblocks in Kontakt mit einer Leiterbahn der gedruckten Schaltung gebracht wird.

Mit anderen Worten: der Kontaktschalter des erfindungsgemäßen Kontaktblocks hat drei Funktionsbereiche:
- Das erste Ende, welches in elektrischer Verbindung mit einer Leiterbahn der gedruckten Schaltung steht.
- Das zweite (freie) Ende, welches von der zugeführten Chipkarte beaufschlagt wird und den Schaltkontakt in Richtung auf die gedruckte Schaltung bewegt.
- Einen mittleren Abschnitt, der bei der Bewegung des Schaltkontaktes durch die Chipkarte gegen eine Leiterbahn der gedruckten Schaltung geführt wird und damit eine elektrische Verbindung zum ersten Ende des Schaltkontaktes schafft oder unterbricht, je nachdem, ob der mittlere Abschnitt dieselbe Leiterbahn wie das erste Ende kontaktiert oder eine der Leiterbahn des ersten Endes funktional zugeordnete weitere Leiterbahn.

Der wesentliche Vorteil gegenüber dem Stand der Technik besteht darin, daß die Funktionsposition der Chipkarte durch einen einteiligen Kontaktschalter (Schaltkontakt) angezeigt und aktiviert werden kann. Die Karte kann beispielsweise seitlich auf die Kontakte aufgeschoben oder von oben auf die Kontakte geführt werden.

In ihrer allgemeinsten Ausführungsform betrifft die Erfindung danach einen Kontaktblock für einen Chipkartenleser mit den Merkmalen von Anspruch 1.

Eine besonders rationelle Fertigung läßt sich dadurch erreichen, daß alle Kontakte parallel zueinander ausgerichtet sind. In diesem Fall können alle Kontakte (einschließlich des Schaltkontaktes) an ihrem ersten Ende, welches funktional den Leiterbahnen der gedruckten Schaltung zugeordnet ist, identisch im Kontaktträger montiert werden. Dabei können die jeweils ersten Enden der Kontakte beispielsweise U-förmig umgebogen werden, wobei das freie Schenkelende gegen die entsprechende Leiterbahn anliegt.

Konkret kann dies zum Beispiel bei dem Schaltkontakt dadurch erfolgen, daß das erste Ende des Schaltkontaktes U-förmig gebogen ist und der freie U-Schenkel parallel zum Kontaktträger verlaufend über diesen vorsteht.

Während die Kontakte des Kontaktblocks, welche der Kontaktierung der Kontakte der Chipkarte dienen, in ihrem mittleren Abschnitt mehr oder weniger ortsfest im Kontaktträger montiert sein können, muß der Kontaktschalter im übrigen im Kontaktträger beweglich geführt sein, um die gewünschte Schaltfunktion ausüben zu können.

Dazu sieht eine Ausführungsform der Erfindung vor, daß der Schaltkontakt mit Ausnahme seines ersten Endes in einer senkrecht zu den Kontaktträger-Oberflächen verlaufenden Nut im Kontaktträger führbar ist. Dieser Abschnitt des Schaltkontaktes kann damit senkrecht zu den Oberflächen des Kontaktträgers bewegt werden.

Nach einer weiteren Ausführungsform ist die Nut zumindest im Bereich des mittleren Abschnittes des Schaltkontaktes zwischen den Kontaktoberflächen des Kontaktträgers durchgehend ausgebildet. Auf diese Weise wird sichergestellt, daß der mittlere Abschnitt des Schaltkontaktes über die der gedruckten Schaltung zugewandte Oberfläche des Kontaktträgers geführt werden kann, um dort eine korrespondierende Leiterbahn zu kontaktieren.

Um diese Kontaktierung mit einem möglichst geringen Schaltweg zu ermöglichen, sieht eine weitere Ausbildung vor, daß der Kontaktabschnitt des Schaltkontaktes in Richtung auf die gedruckte Schaltung ausgeformt (aufgewölbt) ist. Entsprechend kann der Schaltkontakt dabei so innerhalb des Kontaktträgers geführt sein, daß der ausgeformte mittlere Abschnitt im "Normalfall" unmittelbar vor der, der gedruckten Schaltung zugewandten Oberfläche des Kontaktträgers steht. Beim Zuführen einer Chipkarte wird diese dann gegen das freie (zweite) Ende des Schaltkontaktes geführt und drückt dieses Ende in Richtung auf den Kontaktträger, wobei gleichzeitig der mittlere Kontaktabschnitt über die Oberfläche des Kontaktträgers bewegt und gegen eine zugehörige Leiterbahn geführt wird.

Wirken sowohl das erste Ende des Schaltkontaktes als auch der mittlere Abschnitt des Schaltkontaktes auf ein und dieselbe Leiterbahn, so wird die Endposition der Chipkarte (bei der die Kontakte der Chipkarte gegen die freien zweiten Enden der Kontakte des Kontaktträgers anliegen) durch einen Kurzschluß im Bereich der entsprechenden Leiterbahn der gedruckten Schaltung angezeigt.

Es ist aber auch möglich, den mittleren Abschnitt des Schaltkontaktes mit einer separaten Leiterbahn in Kontakt zu bringen, die mit der Leiterbahn des ersten Kontaktendes des Schaltkontaktes in funktioneller (elektrischer) Verbindung steht, um entsprechend die Endposition (Schaltposition) anzuzeigen und zu aktivieren.

Weitere Merkmale der Erfindung ergeben sich aus den Merkmalen der Unteransprüche sowie den sonstigen Anmeldungsunterlagen.

Hierzu gehört eine Ausbildungsform, bei der das zweite (freie) Ende des Schaltkontaktes unter geringer Vorspannung an einem Gegenlager anliegt, welches einerseits der Positionierung des Schaltkontaktes und andererseits der Reduzierung des Schaltweges des Schaltkontaktes dient.

Die Erfindung wird nachstehend anhand eines Ausführungsbeispieles näher erläutert. Dabei zeigen:
- Figur 1:: Eine Aufsicht auf einen erfindungsgemäßen Kontaktblock
- Figur 2:: einen Vertikalschnitt durch den mit einem Schaltkontakt ausgebildeten Abschnitt des Kontaktblockes nach Figur 1
- Figur 3:: einen Vertikalschnitt durch den mit einem weiteren Kontakt ausgebildeten Abschnitt des Kontaktblockes nach Figur 1.
- Figur 4:: einen Vertikalschnitt durch einen Kontaktblock mit einem gegenüber Figur 2 anders gestalteten Schaltkontakt.

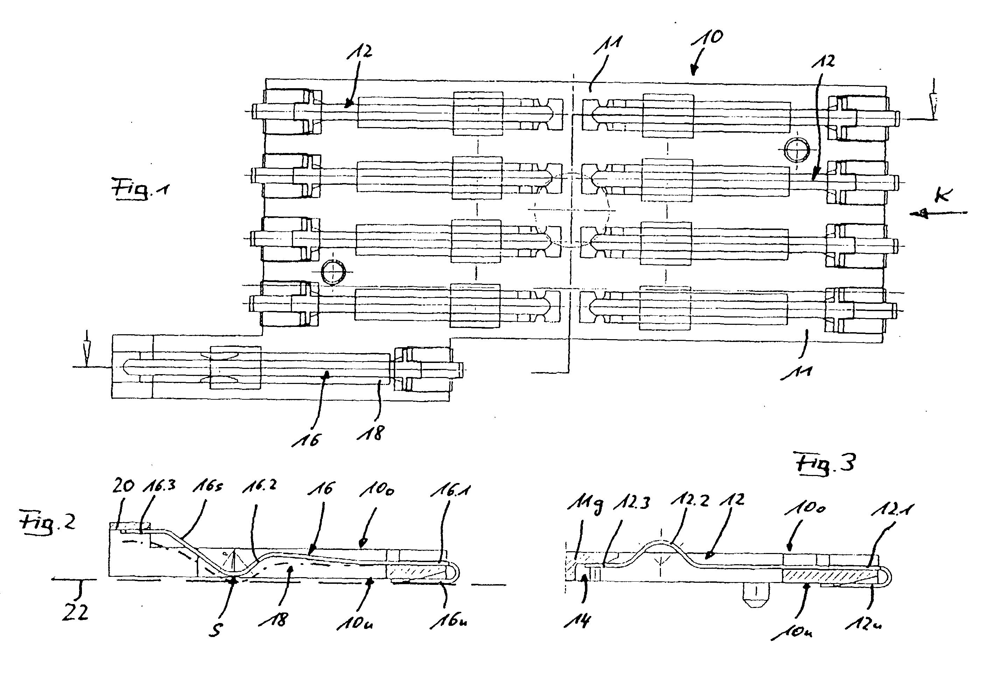

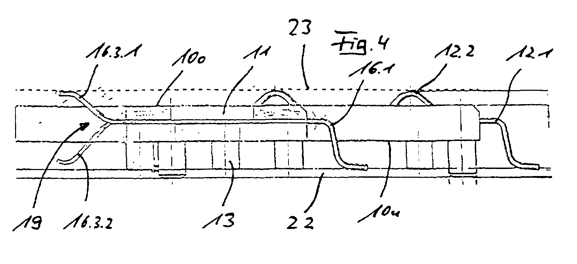

In Figur 1 wird mit dem Bezugszeichen 11 ein als Isolierkörper aus Kunststoff gebildeter Kontaktträger eines Kontaktblocks 10 dargestellt. In diesem Kontaktträger 11 sind hier acht Kontakte 12 analog Figur 3 angeordnet, und zwar in zwei Reihen mit je vier Kontakten 12.

Die Kontakte 12 weisen ein erstes Ende 12.1 auf, welches U-förmig umgebogen ist, und zwar derart, daß der freie Schenkel 12u parallel zur Unterseite des Isolierkörpers (Kontaktträgers) 11 des Kontaktblocks 10 verläuft und über die Unterseite 10u vorsteht (Figur 3).

Der weitere Verlauf der Kontakte 12 innerhalb des Kontaktträgers 11 ist - wie Figur 3 zeigt - wie folgt: in einem mittleren Abschnitt 12.2 sind die Kontakte 12 nach oben aufgewölbt und überragen die Oberseite 10o des Kontaktträgers 11. Das freie zweite Ende 12.3 wird unterhalb eines als Gegenlager dienenden Abschnitts 11g des Kontaktträgers 11 unter Vorspannung gehalten. Dabei ist der Bereich unterhalb des Gegenlagers 11g ausgeschnitten (Bereich 14), so daß die Kontakte 12 und insbesondere ihr mittlerer Abschnitt 12.2 in Richtung auf die Unterseite 10u des Kontaktträgers 11 federnd geführt ist.

Figur 1 zeigt, daß neben den genannten acht Kontakten 12 ein weiterer Kontakt 16 etwas versetzt zu den Kontakten 12, aber parallel zu diesen, im Kontaktträger 11 angeordnet ist. Dieser Kontakt 16 bildet einen Schaltkontakt und seine Anordnung und Funktion ergibt sich aus Figur 2 wie folgt:

Ein erstes Ende 16.1 ist analog zum ersten Ende 12.1 der Kontakte 12 ausgebildet und dieses Ende wird entsprechend den Kontaktenden 12.1 im Kontaktträger 11 fixiert, so daß auf vorstehende Ausführungen verwiesen werden kann.

Ausgehend von diesem ersten Ende 16.1 verläuft der Schaltkontakt 16 zu seinem gegenüberliegenden freien Ende 16.3 innerhalb einer im Kontaktträger 11 ausgebildeten Nut 18, die sich zwischen den Oberflächen 10o, 10u des Kontaktträgers 11 erstreckt.

Der mittlere Abschnitt 16.2 des Kontaktes 16 ist in Richtung auf die Unterseite 10u des Kontaktträgers 11 ausgeformt, also genau entgegengesetzt zum mittleren Abschnitt 12.2 der Kontakte 12.

Ebenfalls genau umgekehrt zu den zweiten (freien) Kontaktenden 12.3 der Kontakte 12 liegt das freie Kontaktende 16.3 des Schaltkontaktes 16 oberhalb der Oberseite 10o des Kontaktträgers 11 an einem Gegenlager 20 an, wobei der Kontakt 16 mit einer Schräge 16s zwischen dem mittleren Abschnitt 16.2 und dem freien Ende 16.3 ausgebildet ist.

In der in Figur 2 mit durchgezogenen Linien dargestellten "Normalposition" befindet sich der Scheitelpunkt S des ausgeformten mittleren Kontaktabschnittes 16.2 in geringem Abstand zur Unterseite 10u des Kontaktträgers 11, während das freie Ende 16.3 gegen das Widerlager 12 anliegt, so daß der Kontakt 16 insgesamt unter Vorspannung im Kontaktträger 11 gehalten wird.

Wird nun eine Chipkarte (nicht dargestellt) in Pfeilrichtung K (Figur 1) zugeführt, so drückt die vordere Kante der Chipkarte kurz vor ihrer Endlage gegen die Schräge 16s des Schaltkontaktes 16 und drückt dabei den mittleren Abschnitt 16.2 über die Unterseite 10u des Kontaktträgers 11 vor, während gleichzeitig das freie Ende 16.3 des Schaltkontaktes 16 vom Gegenlager 20 gelöst wird. Die so erreichte Position des Schaltkontaktes ist in Figur 2 strichpunktiert schematisch dargestellt. Nach einem kurzen weiteren Einschubweg stößt die Chipkarte gegen die Wand im Bereich des Widerlagers 20 und hat ihre Endposition erreicht.

In dieser Position liegen die Kontakte der Chipkarte gegen die aufgewölbten Abschnitte 12.2 der Kontakte 12 an und kontaktieren diese.

Die elektrische Kontaktierung dieser (mechanischen) Kontaktposition erfolgt über den Abschnitt 16.2 des Schaltkontaktes 16, wenn dieser Abschnitt 16.2 durch die Chipkarte über die Unterseite 10u des Kontaktträgers 11 vorgedrückt wird.

In diesem Moment wird der Abschnitt 16.2 mit einer zugehörigen (nicht dargestellten) Leiterbahn einer gedruckten Schaltung 22 in Kontakt gebracht, die in Figur 2 schematisch durch eine Strichlinie dargestellt ist.

In dem hier dargestellten Ausführungsbeispiel kontaktiert der Abschnitt 16.2 dieselbe Leiterbahn, auf der auch der freie Schenkel 16u des Schaltkontaktes 16 liegt, so daß entsprechend ein Kurzschluß verursacht wird, der die Endposition der Chipkarte anzeigt und die elektrische Verbindung zwischen den Kontakten der Chipkarte und den Kontakten 12 zu den entsprechenden Leiterbahnen der gedruckten Schaltung schafft, auf der die Kontakte 12 mit ihren freien Enden 12u liegen.

Die Vorspannung des Schaltkontaktes 16 bewirkt, daß beim Herausziehen der Karte die Kontaktposition des Abschnittes 16.2 mit der Leiterbahn wieder gelöst wird und der Schaltkontakt 16 anschließend seine in Figur 2 dargestellte "Normalposition" (Nicht-Funktionsposition) erneut einnimmt.

In Figur 4 ist eine weitere Ausführungsform eines erfindungsgemäßen Kontaktblockes dargestellt.

Der Kontaktblock 11 ist über Füße 13 auf einer Leiterplatte (gedruckten Schaltung) 22 montiert.

Die jeweils ersten Enden 12.1, 16.1 der Kontakte 12, 16 sind L-förmig abgewinkelt, wobei die freien Enden auf korrespondierenden Leiterbahnen der Leiterplatte 22 aufgelötet sind.

Der Schaltkontakt 16 verläuft vom ersten Ende 16.1 im wesentlichen parallel zu den Oberflächen 10o, 10u des Kontaktträgers 11 durch den Kontaktträger 11 und ragt mit seinem zweiten Ende 16.3 in eine korrespondierende Aussparung 19 des Kontaktträgers 11. Dieses Ende 16.3 des Schaltkontaktes 16 ist in Längsrichtung des Schaltkontaktes 16 geteilt ausgebildet, wobei ein erster Abschnitt 16.3.1 S-förmig nach oben und ein zweiter Abschnitt 16.3.2 S-förmig nach unten abgewinkelt ist.

Wie Figur 4 erkennen läßt, ragt der obere Abschnitt 16.3.1 dabei wiederum über die Oberseite 10o des Kontaktträgers 11 vor (analog zu den Abschnitten 12.2 der Kontakte 12) und der untere Abschnitt 16.3.2 ist so geformt, daß sein freies, abgerundetes Ende in geringem Abstand zur Leiterplatte 22 steht, wenn eine Chipkarte nicht eingeführt ist.

Wird die Chipkarte (in Figur 4 schematisch durch die gestrichelte Linie 23 dargestellt) auf die Kontakte 12, 16 beziehungsweise die entsprechenden Kontaktabschnitte 12.2, 16.3.1 geführt, so bewirkt dies, daß das Kontaktende 16.3.1 nach unten (in Richtung auf den Kontaktträger 11) geführt wird, wobei parallel zu dieser Bewegung der Kontaktabschnitt 16.3.2 in Richtung auf und gegen eine korrespondierende Leiterbahn der Leiterplatte 22 geführt wird, und zwar hier wiederum dieselbe Leiterbahn, auf der auch das erste Kontaktende 16.1 des Schaltkontaktes 16 aufgelötet ist.

In gleicher Weise wie vorstehend beschrieben erfolgt dann ein Kurzschluß im Bereich der dem Schaltkontakt 16 zugeordneten Leiterbahn, welcher die Endposition der Chipkarte im Leser anzeigt.

Die Ausbildung des Kontaktendes 16.3 nach Figur 4 bewirkt gleichzeitig, daß das Kontaktende 16.3.2 entlang der entsprechenden Leiterbahn schleifend geführt wird, so daß hier ein Selbstreinigungseffekt zusätzlich erreicht wird.

## Patentansprüche

1. Kontaktblock (10) für einen Chipkartenleser mit folgenden Merkmalen:
1.1 der Kontaktblock (10) besteht aus einem Kontaktträger (11) und darin angeordneten Kontakten (12, 16);
1.2 die Kontakte (12, 16) sind mit einem ersten Ende (12.1, 12.16) zur Kontaktierung zugehöriger Leiterbahnen einer dem Kontaktblock (10) zugeordneten gedruckten Schaltung (22) ausgebildet,
1.3 die Kontakte (12, 16) stehen mit einem Abschnitt (12.2, 16.3) über die einer zugehörigen Chipkarte zugewandte Oberfläche (10o) des Kontaktträgers (11) vor, **gekennzeichnet durch**
1.4 einen als Schalter dienenden einteiligen Kontakt (16), der im Kontaktträger (11) so geführt ist, daß ein zwischen den Kontaktenden (16.1, 16.3) verlaufender Kontaktabschnitt (16.2) bei der Kontaktierung der Kontakte der Chipkarte mit den übrigen Kontakten (12) des Kontaktblocks (10) selbst und unmittelbar in Kontakt mit einer Leiterbahn der gedruckten Schaltung (22) gebracht wird.

2. Kontaktblock nach Anspruch 1, bei dem die Kontakte (12, 16) parallel zueinander ausgerichtet sind.

3. Kontaktblock nach Anspruch 1, bei dem das erste Ende (16.1) des Schaltkontaktes (16) U-förmig gebogen ist und der freie U-Schenkel (16u) parallel zum Kontaktträger (11) verlaufend über diesen vorsteht.

4. Kontaktblock nach Anspruch 1, bei dem der Schaltkontakt (16) mit Ausnahme seines ersten Endes (16.1) in einer senkrecht zu den Kontaktträger-Oberflächen (10o, 10u) verlaufenden Nut (18) im Kontaktträger (11) führbar ist.

5. Kontaktblock nach Anspruch 4, bei dem die Nut (18) zumindest im mittleren Bereich des Schaltkontaktes (16) zwischen den Kontaktträger-Oberflächen (10o, 10u) durchgehend ausgebildet ist.

6. Kontaktblock nach Anspruch 1, bei dem der Kontaktabschnitt (16.2) des Schaltkontaktes (16) in Richtung auf die gedruckte Schaltung (22) ausgeformt ist.

7. Kontaktblock nach Anspruch 1, bei dem der Kontaktabschnitt (16.2) des Schaltkontaktes (16) derselben Leiterbahn zugeordnet ist wie das erste Ende (16.1) des Schaltkontakts (16).

8. Kontaktblock nach Anspruch 1, bei dem die Kontakte (12) zur Verschiebung ihrer mittleren Kontaktabschnitte (12.2) in Richtung auf den Kontaktträger (11) unter Vorspannung im Kontaktträger (11) geführt sind.

9. Kontaktblock nach Anspruch 1, bei dem der Schaltkontakt (16) zur Bewegung seines mittleren Kontaktabschnittes (16.2) über die der gedruckten Schaltung (22) zugewandte Oberfläche (10u) hinaus mit seinem freien Ende (16.3) unter Vorspannung gegen ein Gegenlager (20) anliegt.

## Claims

1. A contact block (10) for a smart card reader, having the followings features:
1.1 the contact block (10) comprises a contacts carrier (11) and contacts (12, 16) disposed therein,
1.2 the contacts (12, 16) are formed having a first end (12.1, 16.1) for contacting associated conducting paths of a printed circuit (22) being associated to the contact block (10),
1.3 a portion(12.2, 16.3) of the contacts (12, 16) projects beyond the surface (10o) of the contacts carrier (11) facing an associated smart card,
**characterized by**
1.4 a one piece contact (16) serving as a switch, guided in the contacts carrier (11) in such a manner that a contact portion (16.2) extending between the contact ends (16.1, 16.3) is brought itself and directly into contact with a conducting path of the printed circuit (22) while bringing the contacts of the smart card into contact with the other contacts (12) of the contact block (10).

2. The contact block according to claim 1, wherein the contacts (12, 16) are aligned parallel to each other.

3. The contact block according to claim 1, wherein the first end (16.1) of the switching contact (16) is bent in U-shape and the free U-leg (16u) projects beyond the contacts carrier (11), extending parallel to that.

4. The contact block according to claim 1, wherein the switching contact (16), except its first end (16.1), may be guided in a groove (18) within the contacts carrier (11), extending perpendicularly to the surfaces (10o, 10u) of the contacts carrier.

5. The contact block according to claim 4, wherein the groove (18) is formed continuously at least in the middle region of the switching contact (16) between the surfaces (10o, 10u) of the contacts carrier.

6. The contact block according to claim 1, wherein the contact portion (16.2) of the switching contact (16) is molded towards the printed circuit (22).

7. The contact block according to claim 1, wherein the contact portion (16.2) of the switching contact (16) is associated to the same conducting path as the first end (16.1) of the switching contact (16).

8. The contact block according to claim 1, wherein the contacts (12) are guided under bias within the contacts carrier (11) for displacing their middle contact portions (12.2) towards the contacts carrier (11).

9. The contact carrier according to claim 1, wherein the switching contact (16) with its free end (16.3) rests under bias against a counter bearing (20) for moving its middle contact portion (16.2) beyond the surface (10u) facing the printed circuit (22).

## Revendications

1. Bloc de contacts (10) pour un lecteur de cartes à puce, présentant les particularités suivantes
1.1 le bloc de contacts (10) se compose d'un support de contacts (11) et de contacts (12, 16) disposés dans celui-ci,
1.2 les contacts (12, 16) sont réalisés avec une première extrémité (12.1, 12.16) pour la mise en contact des pistes conductives correspondantes d'un circuit imprimé (22) associé au bloc de contacts (10),
1.3 les contacts (12, 16) dépassent avec une section (12.2, 16.3) la surface (10o), orientée vers une carte à puce associée, du support de contacts (11),
**caractérisé en ce que**
1.4 un contact monobloc (16) servant de commutateur est posé dans le support de contacts (11) de telle sorte que, lors de la mise en contact des contacts de la carte à puce, une section de contacts (16.2) s'étendant entre les extrémités de contact (16.1, 16.3) est amenée en contact avec les autres contacts (12) du bloc de contacts (10) lui-même et directement en contact avec une piste conductive du circuit imprimé (22).

2. Bloc de contacts selon la revendication 1, dans lequel les contacts (12, 16) sont orientés parallèlement les uns aux autres.

3. Bloc de contacts selon la revendication 1, dans lequel la première extrémité (16.1) du contact de commutation (16) est pliée en forme de U et la branche en U libre (16u) dépasse le support de contacts (11) en s'étendant parallèlement à celui-ci.

4. Bloc de contacts selon la revendication 1, dans lequel le contact de commutation (16), à l'exception de sa première extrémité (16.1), peut être posé dans une rainure (18), dans le support de contacts (11), s'étendant perpendiculairement aux surfaces de support de contacts (10o, 10u).

5. Bloc de contacts selon la revendication 4, dans lequel la rainure (18) est réalisée sans interruption au moins dans la zone centrale du contact de commutation (16) entre les surfaces de support de contacts (10o, 10u).

6. Bloc de contacts selon la revendication 1, dans lequel la section de contacts (16.2) du contact de commutation (16) est réalisée en direction du circuit imprimé (22).

7. Bloc de contacts selon la revendication 1, dans lequel la section de contacts (16.2) du contact de commutation (16) est affectée à la même piste conductive que la première extrémité (16.1) du contact de commutation (16).

8. Bloc de contacts selon la revendication 1, dans lequel les contacts (12), pour décaler leurs sections de contacts centrales (12.2) en direction du support de contacts (11), sont posés dans le support de contacts (11) sous précontrainte.

9. Bloc de contacts selon la revendication 1, dans lequel le contact de commutation (16), pour déplacer sa section de contacts centrale (16.2), est appliqué avec son extrémité libre (16.3) sous précontrainte contre une butée (20) au-delà de la surface (10u) orientée vers le circuit imprimé (22).
